(19) Europäisches Patentamt

European Patent Office

Office européen des brevets

(11) **EP 1 195 976 B1**

(12) **EUROPÄISCHE PATENTSCHRIFT**

(45) Veröffentlichungstag und Bekanntmachung des Hinweises auf die Patenterteilung:
**23.03.2005 Patentblatt 2005/12**

(51) Int Cl.[7]: **H04M 9/08**, H04B 3/23

(21) Anmeldenummer: **01100382.9**

(22) Anmeldetag: **05.01.2001**

(54) **Akustischer Echokompensator**

Acoustic echo cancellation

Annuleur d'echo

(84) Benannte Vertragsstaaten:
**DE FR GB IT**

(30) Priorität: **12.05.2000 EP 00110078**
**12.05.2000 EP 00110077**

(43) Veröffentlichungstag der Anmeldung:
**10.04.2002 Patentblatt 2002/15**

(60) Teilanmeldung:
**04019229.6 / 1 475 946**

(73) Patentinhaber: **SIEMENS AKTIENGESELLSCHAFT**
**80333 München (DE)**

(72) Erfinder:
• **Breining, Christina, Dr.**
**89077 Ulm (DE)**
• **Schertler, Thomas, Dr.**
**89077 Ulm (DE)**

(56) Entgegenhaltungen:
**EP-A- 0 492 647        US-A- 5 570 423**

• **ANTWEILER C ET AL: "Approximation of optimal step size control for acoustic echo cancellation" ACOUSTICS, SPEECH, AND SIGNAL PROCESSING, 1997. ICASSP-97., 1997 IEEE INTERNATIONAL CONFERENCE ON MUNICH, GERMANY 21-24 APRIL 1997, LOS ALAMITOS, CA, USA,IEEE COMPUT. SOC, US, 21. April 1997 (1997-04-21), Seiten 295-298, XP010226193 ISBN: 0-8186-7919-0**
• **SEIICHI YAMAMOTO AND SEISHI KITAYAMA: "An Adaptive Echo Canceller with Variable Step Gain Method" THE TRANSACTIONS OF THE IECE OF JAPAN, Bd. E65, Nr. 1, Januar 1982 (1982-01), Seiten 1-8, XP002211658 JAPAN**
• **OKELLO J ET AL: "A new modified variable step size for the LMS algorithm" CIRCUITS AND SYSTEMS, 1998. ISCAS '98. PROCEEDINGS OF THE 1998 IEEE INTERNATIONAL SYMPOSIUM ON MONTEREY, CA, USA 31 MAY-3 JUNE 1998, NEW YORK, NY, USA,IEEE, US, 31. Mai 1998 (1998-05-31), Seiten 170-173, XP010289968 ISBN: 0-7803-4455-3**
• **CHRISTINA BREINING AND THOMAS SCHERTLER: "Delay-free low-cost step-gain estimation for adaptive filters in acoustic echo cancellation" ELSEVIER SIGNAL PROCESSING, Bd. 80, Nr. 9, 14. August 2000 (2000-08-14), Seiten 1721-1731, XP002211659**

**Beschreibung**

Die Erfindung betrifft ein Verfahren und eine Anordnung zur Echokompensation eines Signals mittels eines adaptiven Filters gemäß einem der unabhängigen Patentansprüche.

Echokompensationsverfahren unter Nutzung adaptiver Filter, die mit Hilfe eines Adaptionsalgorithmus eingestellt werden, sind bekannt. Bei derartigen Filtern werden akustische Umgebungseigenschaften modelliert. Je besser die Modellierung gelingt, desto stärker ist die Dämpfung unerwünschter Echos, die in einem Signal enthalten sind. Um ein optimales Abgleichverhalten zu erreichen, muß die Adaptionsschrittweite des Filtersteuerverfahrens an die momentanen Pegelverhältnisse des lokalen Signals und des fernen Sprachsignals sowie an die bereits erreichte Echodämpfung dynamisch angepaßt werden. Das ist insbesondere wichtig für akustische Koppelung, also bei Freisprecheinrichtungen oder Koppelung im Mobiltelefon durch Körperschall, weil die Übertragungseigenschaften des Raumes zeitvariant sind und durch gleichzeitiges Sprechen beider Teilnehmer eine zeitvariante Störung auftritt.

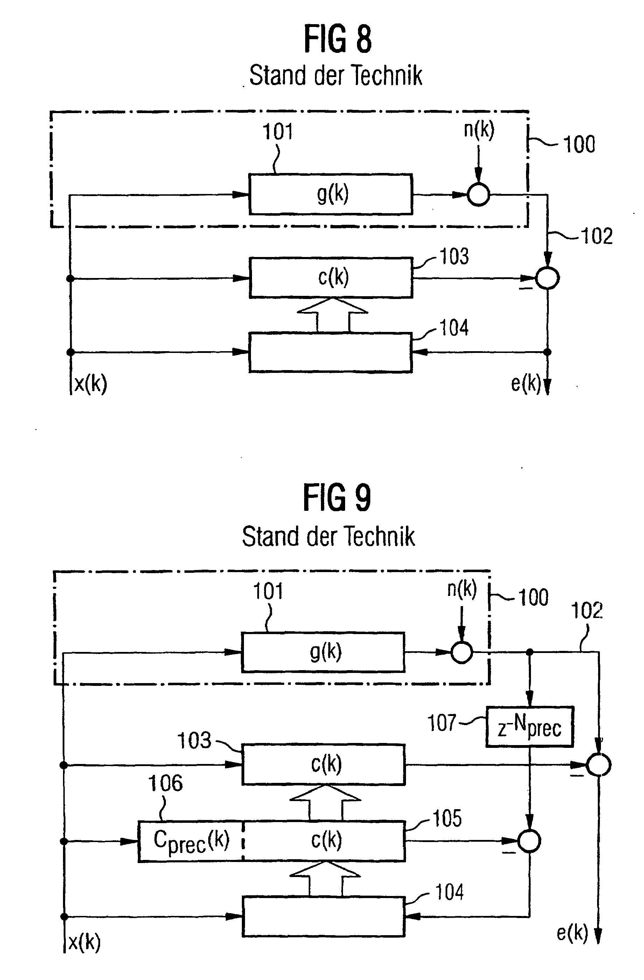

In Fig. 8 ist die prinzipielle Struktur eines digitalen Systems zur Echokompensation dargestellt. Die darin enthaltenen Filter sind vom FIR(Finite Impulse Response)-Typ. Mit dem Bezugszeichen 100 ist ein System bezeichnet, das die Übertragungseigenschaften eines Lautsprechers, eines Umgebungsraumes und eines Mikrofons simuliert, wie beispielsweise ein Mobiltelefon oder ein Telefon mit Freisprecheinrichtung (auch als LRM-System: Lautersprecher-Raum-Mikrofon-System bezeichnet).

Das von einem fernen Gesprächsteilnehmer über einen Lautsprecher wiedergegebene Sprachsignal ist mit x(k), das vom lokalen Gesprächsteilnehmer stammende Sprachsignal mit n(k) bezeichnet. Das Sprachsignal n(k) beinhaltet außer Sprachinformation noch Hintergrundrauschen.

Ziel des Systems ist es, das Sprachsignal $\mathbf{x}(k)$ vom fernen Gesprächsteilnehmer bei der Übertragung des lokalen Sprachsignals $\mathbf{n}(k)$ möglichst gut zu dämpfen, um ein unerwünschtes Echo beim fernen Gesprächsteilnehmer zu vermeiden. Hierzu ist es erforderlich, die Raumimpulsantwort des LRM-Systems durch ein Filter optimal nachzubilden. Allerdings kann in der Praxis ein Teil des Echos aufgrund der begrenzten Anzahl von Filterkoeffizienten des Filters nicht unterdrückt werden und muß daher im lokalen Sprachsignal $\mathbf{n}(k)$ als Störsignal $n_e(k)$ in Kauf genommen werden.

Die Raumimpulsantwort des LRM-Systems wird durch ein FIR-Filter 101 mit dem Koeffizientenvektor $\mathbf{g}(k)$ modelliert. Die Impulsantwort des FIR-Filters 101 entspricht der Raumimpulsantwort des LRM-Systems. Bekanntermaßen entspricht die Gewichtsfolge der Raumimpulsantwort des Filters 100 den Filterkoeffizienten. Mit den "letzten" Filterkoeffizienten werden die zeitlich als letzte am Filterausgang erscheinenden Werte der Gewichtsfolge bezeichnet. Die Raumimpulsantwort ist durch die akustischen Eigenschaften des LRM-Systems fest vorgegeben.

Zur Modellierung der akustischen Gegenheiten wird das Sprachsignal $\mathbf{x}(k)$ dem FIR-Filter 101 zugeführt und das Filterausgangssignal mit dem lokalen Sprachsignal $\mathbf{n}(k)$ zu einem Signal 102 addiert.

Aus dem Signal 102 soll nun das mit der Raumimpulsantwort modellierte Sprachsignal $\mathbf{x}(k)$ entfernt werden, das der ferne Gesprächsteilnehmer als unerwünschtes Echosignal hört. Hierzu ist ein zweites FIR-Filter 103 mit dem Koeffizientenvektor $\mathbf{c}(k)$ zur Nachbildung der Raumimpulsantwort vorgesehen. Dem zweiten Filter 103 wird das Sprachsignal $\mathbf{x}(k)$ zugeführt, gefiltert und von dem Signal 102 subtrahiert. Das so erhaltene und an den fernen Gesprächsteilnehmer zu übertragende Signal $\mathbf{e}(k)$ enthält im Idealfall, d.h. bei optimaler Adaption des Filters 103 an das Filter 101, nur das Sprachsignal $\mathbf{n}(k)$ und die unvermeidbaren Störungen $n_e(k)$.

In der Praxis ist allerdings die Modellierung der Raumimpulsantwort mit dem zweiten Filter 103 schwierig. Aufgrund der bereits erwähnten Zeitvarianz der Übertragungseigenschaften des Raumes und der damit verbundenen Änderung der Raumimpulsantwort müssen die Koeffizienten $\mathbf{c}(k)$ des zweiten Filters 103 fortwährend mittels eines Algorithmus 104 mit Schrittweitensteuerung angepaßt werden. Hierzu weist der Algorithmus eine Schrittweite auf, mit der die Anpassung der Koeffizienten $\mathbf{c}(k)$ durchgeführt wird. Der Algorithmus zur Anpassung der Koeffizienten $\mathbf{c}(k)$ des zweiten Filters 103 erfordert zudem einen beträchtlicher Rechenaufwand. Viele bekannte Algorithmen weisen eine feste Schrittweite auf und sind nur in der Lage, die Adaption der Filterkoeffizienten an die sich ändernde Raumimpulsantwort zu stoppen oder fortzuführen. Zwischenzustände, also eine Veränderung der Schrittweite, sind daher nicht wählbar. Dies führt bei den bekannten Algorithmen zu einem erheblichen Verlust an Echodämpfung.

Ein bevorzugter Algorithmus zur Anpassung der Filterkoeffizienten $\mathbf{c}(k)$ ist der NLMS(Normalized Least Mean Square)-Algorithmus. Mit dem NLMS-Algorithmus kann die auch als Systemabstand bezeichnete Differenz $\mathbf{d}(k)=\mathbf{g}(k)-\mathbf{c}(k)$ zwischen den die Raumimpulsantwort modellierenden Filterkoeffizienten $\mathbf{c}(k)$ des zweiten Filters 103 und den Filterkoeffizienten $\mathbf{g}(k)$ des Filters 101 des LRM-Systems 100 verringert werden. Allerdings erfordert der NLMS-Algorithmus eine hohe Rechenleistung eines Systems zur Echodämpfung und bestimmt daher wesentlich die Performance des Systems.

Zur Schrittweitensteuerung wurde vorgeschlagen, zusätzliche Filterkoeffizienten zur Verzögerung des Sprachignals $\mathbf{x}(k)$ einzuführen und eine Adaption der Filterkoeffizienten $\mathbf{c}(k)$ anhand dieser zusätzlichen Filterkoeffizienten durchzuführen. Da den zusätzlichen Koeffizienten keine entsprechenden Koeffizienten des Filters 101 des LRM-Systems 100 gegenüberstehen, konvergieren diese während einer Adaption gegen Null. Daher kann der Systemabstand **d**(k), welcher die Schrittweite des Algorithmus zur Adaption bestimmt, anhand der Werte der zusätzlichen Koeffizienten ermittelt werden. Die zusätzlichen Koeffizienten dürfen allerdings nicht in den Sprachsignalpfad eingeführt werden, um eine verzögerungsfreie Übertragung, beispielsweise bei Festnetztelefonen und bei Mobiltelefonen ohne Benutzung der Freisprecheinrichtung, gemäß ITU-Empfehlungen zu ermöglichen. Daher ist eine sehr aufwendige doppelte Filterstruktur notwendig. Hieraus ergeben sich höhere Kosten.

Ein weiterer Nachteil ist bei diesem Verfahren das sogenannten Einfrieren des Echokompensationsfilters, d. h. die Schrittweite kann aufgrund der gegen Null konvergierenden zusätzlichen Koeffizienten extrem klein werden. Dies führt dazu, daß keine Adaption der Filterkoeffizienten **c**(k) mehr durchgeführt wird, was bei einer Änderung der Raumimpulsantwort zu einer schlechten Echodämpfung führt. Daher ändern sich auch die zusätzlichen Koeffizienten nicht mehr, die durch die Adaption Werte nahe Null oder gar gleich Null angenommen haben. Da die Werte der Koeffizienten in direktem Zusammenhang zur Größe der Schrittweite stehen, kann schließlich das Adaptionsverfahren nicht mehr ohne weiteres in Gang gesetzt werden. Das akustische System ändert sich jedoch durch Temperaturschwankungen und Bewegung im Raum während der Konversation. Diese Veränderungen können nun nicht mehr nachgeführt werden mit der Folge einer drastischen Reduzierung der Echodämpfung.

In Fig. 9 ist ein System zur akustischen Echokompensation mit doppelter Filterstruktur und zusätzlichen Filterkoeffizienten zur Verzögerung des Signals dargestellt. Elemente mit gleicher Funktion wie bei dem in Fig. 8 dargestellten System sind in der Fig. 9 mit denselben Bezugszeichen versehen und werden nicht nochmal erläutert. Ein drittes Filter 105 mit denselben Filterkoeffizienten **c**(k) wie das zweite Filter 103 ist diesem eingangsseitig parallel geschaltet. Allerdings weist das dritte Filter 105 zusätzliche Filterkoeffizienten 106 auf, die üblicherweise als sogenannte Precursor-Koeffizienten $c_{prec}$(k) bezeichnet werden und den eigentlichen Filterkoeffizienten **c**(k) vorgeschaltet sind, d.h. als erste Koeffizienten mit einem Eingangssignal multipliziert werden. Aufgrund der zusätzlichen Koeffizienten wird die Verzögerungszeit des dritten Filters 105 gegenüber dem zweiten Filter 103 verlängert.

Dem dritten Filter 105 wird wie dem zweiten Filter 103 das Sprachsignal **x**(k) zugeführt. Das Ausgangssignal des dritten Filters 105 wird von dem Ausgangssignal des Systems 100 subtrahiert. Hierzu wird das Ausgangssignal 102 des Systems 100 mittels eines Verzögerungsglieds 107 entsprechend der Verzögerung durch die Precursor-Koeffizienten 106 des dritten Filters 105 vor der Subtraktion verzögert. Das so erhaltene Ergebnis wird einer Schrittweiten-Steuerung 104 zur Adaption der Filterkoeffizienten **c**(k) durch den NLMS-Algorithmus 104 zugeführt. Die Schrittweitensteuerung 104 paßt dann die Koeffizienten **c**(k) des dritten Filters 105 an. Das dritte Filter 105 steuert wiederum das zweite Filter 103, genauer gesagt ersetzt dessen Filterkoeffizienten **c**(k-1) durch seine angepaßten Filterkoeffizienten **c**(k). Das Ausgangssignal des zweiten Filters 103 wird schließlich vom Ausgangssignal 102 des Systems 100 zur Echodämpfung subtrahiert.

Das in Fig. 9 dargestellte System benötigt somit zwei Filter 103 und 105 zur Anpassung der Koeffizienten **c**(k), wodurch eine Implementierung des Systems insbesondere als integrierte Schaltung teuer wird.

Aus den Veröffentlichungen

D1: ANTWEILER C et al: "Approximation of optimal step size control for acoustic echo cancellation", ACOUSTICS, SPEECH and SIGNAL PROCESSING, 1997. ICASSP-97, 1997 IEEE International Conference, Munich, Germany 21-24 April 1997, LOS Alamitos, CA, USA, IEEE Comput. Soc., US, 21.April 1997, Seiten 295-298, XP=010226193 ISBN: 0-8186-7919-0

D2: SEICHI YAMAMOTO and SEISHI KITAYAMA: "An Adaptive Echo Canceller with Variable Step Gain Method", The Transactions of the IECE of Japan, Bd. E65, Nr. 1, Januar 1982, Seiten 1-8, XP002211658, Japan

D3: EP-A-0 492 647 (Nippon Electric Co), 1. Juli 1992

Sind ebenfalls Verfahren zur Echokompensation mittels adaptiver Schrittweitenregelung bekannt. Auch diese Verfahren haben jeweils spezifische Vorteile aber unter gewissen Umständen auch Nachteile.

Aufgabe der vorliegenden Erfindung ist es daher, ein Verfahren zur Echokompensation eines Signals mittels eines adaptiven Filters sowie eine entsprechende Anordnung vorzuschlagen, mit der bei verhältnismäßig geringem Aufwand eine effiziente Echokompensation zu erzielen ist.

Diese Aufgabe wird durch ein Verfahren mit den Merkmalen von Patentanspruch 1 und durch eine Anordnung mit den Merkmalen von Patentanspruch 10 gelöst. Weitergehende Ausgestaltungen der Erfindung sind den abhängigen Patentansprüchen entnehmbar.

Die Lösung der Aufgabe erfolgt dadurch, daß zur Einstellung der Schrittweite eine Untermenge von Werten der Gewichtsfolge der Impulsantwort eines Filters herangezogen wird, das adaptiv ist und dessen Übertragungsfunktion an akustische Umgebungseigenschaften angepaßt wird. Das Filter wird insbesondere bei verzögerungsfreier Sprachsignalübertragung und Sprachwiedergabe im Telekommunikationsbereich eingesetzt und weist eine Vielzahl von einstellbaren Filterkoeffizienten auf, deren Werte der Gewichtsfolge der Impulsantwort des Filters entsprechen und die mittels eines Algorithmus mit einer einstellbaren Schrittweite eingestellt werden. Für die Realisierung des Verfahrens zur Echokompensation wird ausgenutzt, daß Werte der Gewichtsfolge der Raumimpulsantwort mit zunehmender Echolaufzeit geringe Beträge aufweisen und daher die im Stand der Technik aufwendig eingeführten zusätzlichen Filterkoeffizienten und den damit zusammenhängenden Aufwand ersetzen können. Hierdurch entfällt zudem die Signalverzögerung durch zusätzliche Filterkoeffizienten. Ebenso wird der Aufwand zum Speichern und Anpassen bzw. Einstellen von Filterkoeffizienten verringert, da sich diese im akustisch aktiven Teil des Filters befinden.

Dabei wird ein Meßintervall vorgesehen, in dem die zur Einstellung der Schrittweite heranzuziehenden Werte der Gewichtsfolge der Impulsantwort gemessen werden. Das Meßintervall wird hierzu derart plaziert, daß Werte ungleich Null zur Einstellung der Schrittweite herangezogen werden. Dies verhindert ein "Einfrieren", d.h. Stoppen der Adaption des Filters aufgrund einer zu kleinen Schrittweite und bewirkt zudem, daß kein zusätzlicher Algorithmus zum Abfangen oder Auflösen eines derartigen Zustandes erforderlich ist.

In einer bevorzugten Ausführungsform des Verfahrens wird das Meßintervall derart plaziert, daß Werte nahe oder am Ende der Gewichtsfolge der Impulsantwort des Filters gemessen werden. Diese Werte sind bei einem optimal adaptierten Filter sehr klein und eignen sich daher gut zum Bestimmen des Systemabstands bzw. der Systemabweichung vom optimal adaptierten Filter. Diese Plazierung wird insbesondere bei ausreichend kurzen Filtern, d.h. Filtern mit einer kurzen Impulsantwort, relativ zur Nachhallzeit des Raumes, angewandt, da in diesem Fall Werte nahe oder am Ende der Gewichtsfolge noch so groß sind, daß die Schrittweite nicht zu klein wird und das adaptive Filter "einfriert".

Bei einem langen Filter, d.h. einem Filter mit einer langen Gewichtsfolge und dementsprechend vielen Filterkoeffizienten, wird dagegen das Meßintervall vorzugsweise derart plaziert, daß Werte etwa in der Mitte der Gewichtsfolge der Impulsantwort des Filters gemessen werden. Bei einem derartigen Filter sind die Werte nahe oder am Ende der Gewichtsfolge sehr klein und können ein "Einfrieren" des Filters bewirken. Um die Echodämpfung zu verbessern, wird vorzugsweise eine Korrektur der Messung der zur Einstellung der Schrittweite heranzuziehenden Werte vorgenommen.

Vor Beginn der Adaption des Filters und damit vor Beginn der Messung sollten die zur Einstellung der Schrittweite heranzuziehenden Werte initialisiert werden. Idealerweise weisen durch die Initialisierung die zur Einstellung der Schrittweite heranzuziehenden Werte eine mittlere Abweichung von idealen Werten zur Modellierung der akustischen Umgebungseigenschaften auf. Durch die Initialisierung wird zwar ein zusätzliches, "künstliches" Echosignal beim Beginn der Adaption erzeugt, das aber durch das Echosignal des Raumes verdeckt wird. Zudem können die Initialisierungs-Werte derart gleich verteilt sein, daß das "künstliche" Echo beim Beginn der Adaption als weißes Rauschen wahrnehmbar und deshalb weniger störend ist.

Das Verfahren kann ferner derart ausgestaltet sein, daß beim Einstellen der Schrittweite ein Biaswert verwendet wird. Insbesondere bei langen Filtern ermöglicht der Biaswert im wesentlichen besseren Endabgleich und verhindert gleichzeitig Einfrieren". Insbesondere kann der Biaswert adaptiv geschätzt werden auf Basis bereits ermittelter Abweichungen der zur Einstellung der Schrittweite heranzuziehenden Werte von idealen Werten zur Modellierung der akustischen Umgebungseigenschaften. In einer besonders bevorzugten verfahrensmäßigen Ausgestaltung wird der Biaswert mittels einem nichtlinearen Filter ermittelt, wodurch eine besonders hohe Echodämpfung unter Vermeidung des "Einfrierens" erhalten wird.

Insgesamt benötigt das erfindungsgemäße Verfahren verhältnismäßig wenig Rechenaufwand, erweist sich als sehr robust gegenüber lokalen Sprachsignalen sowie Änderungen der akustischen Umgebungseigenschaften und ist einfach implementierbar. Ferner vermeidet es zusätzliche Verzögerungen im Signalpfad, was bei Festnetztelefonen erforderlich oder wenigstens dahingehend vorteilhaft ist, daß die gegenüber dem Verfahren mit Precursor-Koeffizienten nach dem Stand der Technik eingesparte zusätzliche Verzögerungszeit für eine weitere Signalverarbeitung zur Verfügung steht. Zusammenfassend kann mit dem erfindungsgemäßen Verfahren eine Echodämpfung erzielt werden, die Ergebnisse nahezu wie bekannte Verfahren des Standes der Technik bei verhältnismäßig geringem Aufwand erreicht.

Weitere Vorteile und Anwendungsmöglichkeiten der Erfindung sowie deren systemtheoretische Grundlagen werden nachfolgend insbesondere anhand mehrerer durchgeführter Simulationen des erfindungsgemäßen Verfahrens in Verbindung mit den Zeichnungen erläutert. In den Zeichnungen zeigen:

Fig. 1 die gemessenen Raumimpulsantworten zweier Räume mit unterschiedlichen Widerhallzeiten und eines Automobilinnenraums,

Fig. 2 die simulierte Konvergenz des NLMS-Algorithmus in einem System zur Echodämpfung mit 128 Filterkoeffizienten für Sprachsignale in einem Fahrzeuginnenraum, dessen Impulsantwort mit 2047 Koeffizienten dargestellt ist,

Fig. 3 den zeitlichen Verlauf eines typischen Sprachsignals und eines lokalen Sprachsignals,

Fig. 4 die simulierte Konvergenz des NLMS-Algorithmus in einem System zur Echodämpfung mit 768 Filterkoeffizienten für Sprachsignale in einem Raum, dessen Impulsantwort durch 2044 Koeffizienten dargestellt ist,

Fig. 5 die simulierte Konvergenz des NLMS-Algorithmus in einem System zur Echodämpfung mit 256 Filterkoeffizienten für Sprachsignale in einem Fahrzeuginnenraum, dessen Impulsantwort 2047 Koeffizienten umfaßt,

Fig. 6 die tatsächliche und geschätzte Systemabweichung während einer Adaption eines Adaptionsfilters mit 256 Koeffizienten in einem Fahrzeuginnenraum, der 2047 Filterkoeffizienten umfaßt,

Fig. 7 die simulierte Konvergenz des NLMS-Algorithmus in einem System zur Echodämpfung mit 256 Filterkoeffizienten für Sprachsignale in einem Fahrzeuginnenraum, dessen Impulsantwort 2047 Koeffizienten umfaßt, wobei bei dem erfindungsgemäßen Verfahren ein Biaswert angewandt wird,

Fig. 8 das Blockschaltbild eines Filters zur akustischen Echodämpfung gemäß dem Stand der Technik und

Fig. 9 das Blockschaltbild eines Filters zur akustischen Echodämpfung mit Precursor-Koeffizienten und doppelter Filterstruktur gemäß dem Stand der Technik.

Im folgenden werden vor der Beschreibung von Simulationsergebnissen des erfindungsgemäßen Verfahrens hier die wesentlichen systemtheoretischen Grundlagen zum besseren Verständnis der Arbeits- und Wirkungsweise der Erfindung erläutert. Bereits eingangs erläuterte Parameter und Koeffizienten werden ohne weitere Beschreibung übernommen.

Ein echogefiltertes und an einen fernen Gesprächsteilnehmer zu übertragende Sprachsignal $e$(k) berechnet sich aus einem lokalen Sprachsignal $n$(k) und dem Sprachsignal $x$(k) des fernen Teilnehmers anhand der folgenden Gleichung:

$$e(k) = (g(k) - c(k))^T x(k) + n_e(k) + n(k)$$
$$= d(k)^T x(k) + n_e(k) + n(k).$$

Mittels des NLMS-Algorithmus werden die Filterkoeffizienten $c$(k) eines adaptiven Filters angepaßt:

$$c(k + 1) = c(k) + a(k) e(k) / ||x(k)||^2 x(k).$$

$||x(k)||^2$ ist die euklidische Vektornorm des Sprachsignalvektors $x$(k). Der Parameter a(k) bestimmt die Schrittweite des NLMS-Algorithmus. Für eine möglichst gute Echodämpfung ist die Wahl der Schrittweite von wesentlicher Bedeutung. Unter der Annahme, daß sowohl das Erregungssignal als auch Störsignal "weiße" Prozesse sind, kann eine optimale Schrittweite wie folgt berechnet werden:

$$a(k) = E\{||d(k)||^2\}/N \, E\{||x(k)||^2\}/E\{e^2(k)\}$$

E{} bezeichnet dabei den Erwartungswert.

Allerdings ist bei einer Echtzeit-Anwendung der Systemabstands-Vektor $d$(k) unbekannt, so daß dessen mittlere quadratische Norm - der Systemabstand - geschätzt werden muß.

Wie bereits eingangs erläutert, wurde bereits vorgeschlagen, den Systemabstand anhand von sogenannten Precursor-Koeffizienten $c_{prec}$(k) zu schätzen, die den eigentlichen Filterkoeffizienten vorgeschaltet sind. Die N Precursor-Koeffizienten sollen während des Adaptionsvorgangs gegen Null konvergieren, so daß deren Wert als Maß für den Systemabstand herangezogen werden kann. Die mittels der Precursor-Koeffizienten geschätzte Schrittweite läßt sich somit wie folgt berechnen:

$$\hat{a}_{prec}(k) = ||c_{prec}(k)||^2 / N_{prec} ||^2 x(k)||^2 / M(e^2(k)),$$

Der Mittelwert $M(e^2(k))$ berechnet sich anhand der folgenden Gleichung:

$$M(e^2(k)) = \beta M(e^2(k-1)) + (1 - \beta)e^2(k), \, 0 << \beta < 1.$$

Diese bekannte Schätzung der Schrittweite erfordert einen hohen Rechenaufwand der Schrittweitensteuerung bis zur Adaption der Precursor-Koeffizienten. Zudem ist die zusätzliche Verzögerung durch die Precursor-Koeffizienten aufgrund von Standards, die bei Festnetztelefonie eine maximale Verzögerung von nur 2 ms zulassen, nicht tolerierbar. Daher wird ein zweites, paralleles adaptives Filter außerhalb des Signalpfades benötigt, in dem die Precursor-Koeffizienten enthalten sind. Die gegen Null konvergierenden Precursor-Koeffizienten bewirken allerdings auch, daß die geschätzte Schrittweite $\hat{a}_{prec}$(k) immer kleiner wird. Ändert sich nun die Raumimpulsantwort, beispielsweise wenn eine Person den Raum betritt, wirkt sich diese Änderung nicht auf die Precursor-Koeffizienten aus. Die Schrittweite bleibt daher klein und eine notwendige Adaption an die geänderte Raumimpulsantwort findet nicht statt. Dieser Zustand wird auch als "Freezing" bezeichnet. Insgesamt resultiert dies in einer geringen Echodämpfung nach einer Änderung der Raumimpulsantwort. Um eine derartige Situation zu vermeiden, sind aufwendige Prozeduren zum Re-Initialisieren der Precursor-Koeffizienten erforderlich.

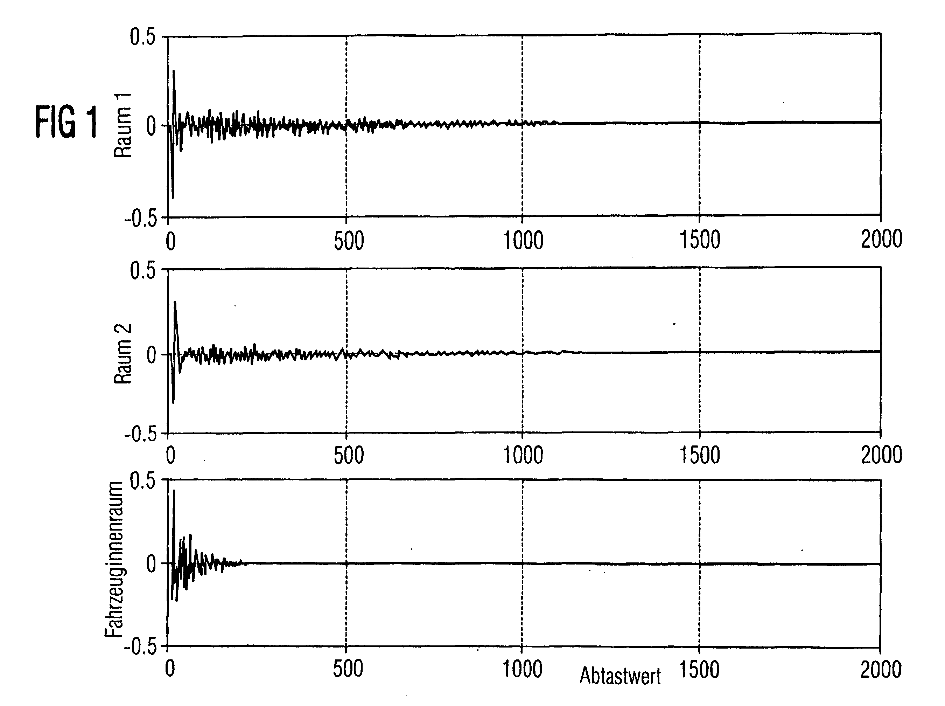

Betrachtet man nun die Meßwerte von Raumimpulsantworten typischer Räume wie in Fig. 1 etwas näher, ist festzustellen, daß die Energiekurven der Impulsantworten eine etwa exponentiell abfallende Hüllkurve aufweisen. In Fig. 1 besitzt zudem der Raum 1 eine längere Widerhallzeit als der Raum 2 oder Fahrzeuginnenraum, was an den noch relativ hohen Energieanteilen bei Abtastwerten größer 500 wie im dargestellten Beispiel erkennbar ist (selbstverständlich sind nur die Raumimpulsantworten dreier typischer Innenräume dargestellt, andere Raumimpulsantworten können natürlich mehr oder wenig stark von den abgebildeten Kurven abweichen). Den Erfindern ist nun nach eingehendem Studium dieser Kurven aufgefallen, daß Signalanteile mit zunehmender Zeit oder Abtastwert gegen Null konvergieren. Die Impulsantwort eines adaptierten Filters muß demnach einen zumindest ähnlichen Verlauf aufweisen. Es gilt sogar, daß bei längerer Verzögerungszeit, d. h. bei längerer akustischer Laufzeit in einem Raum, die Dämpfung eines Signalanteils mit langer Laufzeit entsprechend groß ist. Insbesondere wurde festgestellt, daß verschiedene Meßkurven in demselben Raum im wesentlichen einen exponentiellen Abfall aufweisen. Mit anderen Worten weist eine typische Raumimpulsantwort im wesentlichen einen exponentiellen Abfall auf, unabhängig vom Meßort.

Nun haben die Erfinder den Schluß gezogen, daß bei einem ausreichend adaptierten Filter zur Simulation der Raumimpulsantwort bei einer Änderung derselben die Differenz, die bei zwei aufeinanderfolgenden Messungen vor und nach der Änderung auftritt, als Maß für die Systemabweichung des Filters betrachtet werden kann.

Diese Schlußfolgerung wird insbesondere dadurch bestätigt, daß die am stärksten verzögerten Signalanteile der Impulsantworten und die entsprechenden Koeffizienten Änderungen der Raumimpulsantwort sehr deutlich widerspiegeln. Anstelle einer Schätzung der Systemabweichung anhand der am wenigsten verzögerten oder gar unverzögerten Signalanteile - wie bei der Precursor-Methode - und der entsprechenden Koeffizienten im Filter bilden die kleinen Signalanteile sowie die entsprechenden Koeffizienten eine ausreichende Grundlage, um die Systemabweichung hinreichend zu schätzen. Vereinfacht ausgedrückt wird die Systemabweichung anhand der Signalanteile geschätzt, die eine lange Laufzeit aufweisen und demnach am besten die akustischen Raumverhältnisse und deren Änderungen widerspiegeln. Der große Vorteil besteht demnach darin, daß mit Filterkoeffizienten im akustischen Pfad die Systemabweichung geschätzt wird und keine "künstliche" Verzögerung von Signalanteilen wie bei der Precursor-Methode erforderlich ist. Insbesondere eignen sich hierzu die Filterkoeffizienten mit der längsten Verzögerungszeit, d. h. die am "Ende" eines Transversal-Filters lokalisierten oder letzten Koeffizienten.

Wie die Precursor-Koeffizienten müssen die zur Schätzung der Systemabweichung heranzuziehenden Koeffizienten initialisiert werden, wodurch ein "künstliches" Echosignal erzeugt wird, das jedoch im wesentlichen durch das tatsächliche Raumecho verdeckt wird und zudem aufgrund der gleich verteilten Koeffizienten wie Rauschen erscheint. Die Initialisierungswerte sollten die Standardabweichung der Filterkoeffizienten von idealen Werten repräsentieren.

Die auf dieser Grundlage geschätzte Systemabweichung berechnet sich anhand der folgenden Gleichung:

$$\hat{a}_{ifc}(k) = ||c_{ifc}(k)||^2 / N_{ifc} ||x(k)||^2 / M(e^2(k)).$$

Wenn das adaptive Filter in Bezug auf die Widerhallzeit eines LEM-Systems nicht zu lang ist, kann "Freezing" vermieden werden. Eine Re-Initialisierung der Filterkoeffizienten bei einer Änderung der Raumimpulsantwort ist daher nicht erforderlich. Im folgenden werden nun anhand von Diagrammen Simulationsergebnisse des erfindungsgemäßen Verfahrens erläutert.

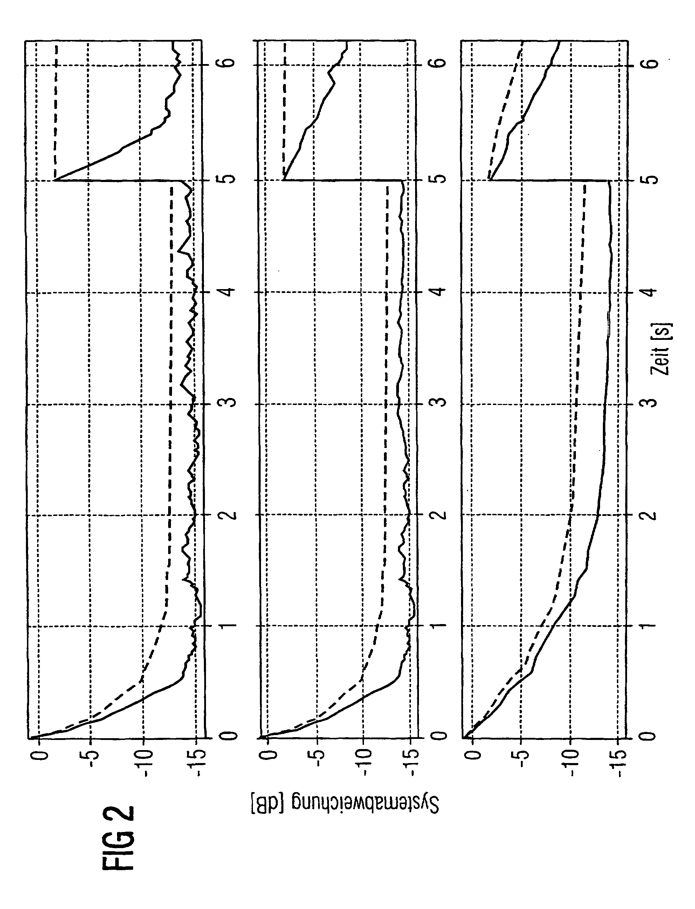

Die Figuren 2, 4, 5 und 7 zeigen anhand von jeweils drei Diagrammen Simulationen mit Sprachsignalen von typischen Situationen bei der Echodämpfung im Telekommunikationsbereich. Die Abszisse jedes Diagramms entspricht der in Sekunden angegebenen Zeit, die Ordinate der Systemabweichung in Dezibel (dB).

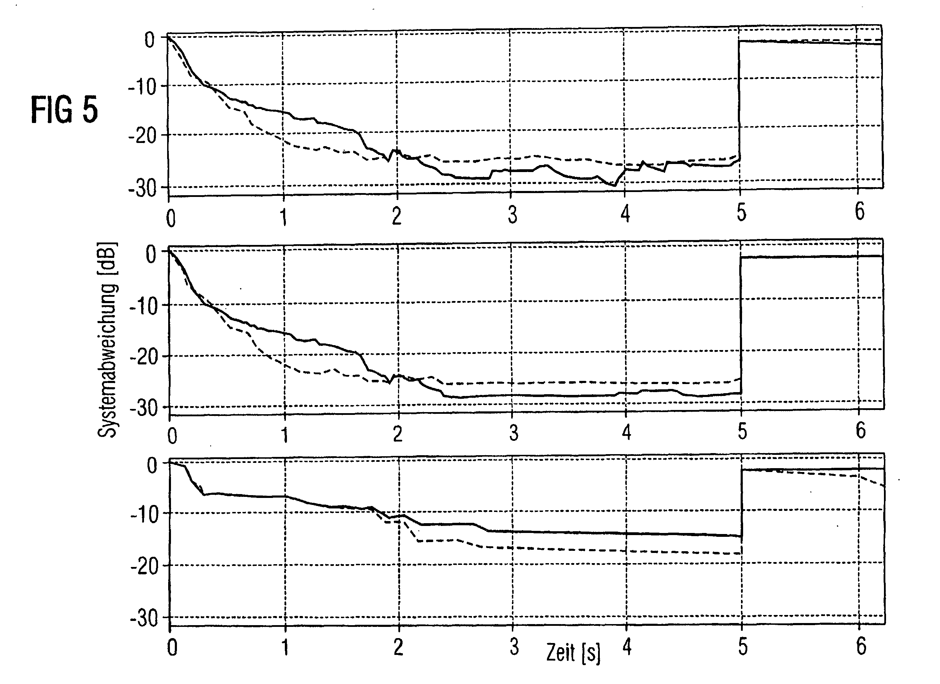

In den Figuren 2, 4 und 7 sind die angegebenen Wertebereiche und Werte über zehn Simulationen der Echodämpfung von Sprachsignalen gemittelt. In Fig. 5 wurde lediglich eine Simulation durchgeführt.

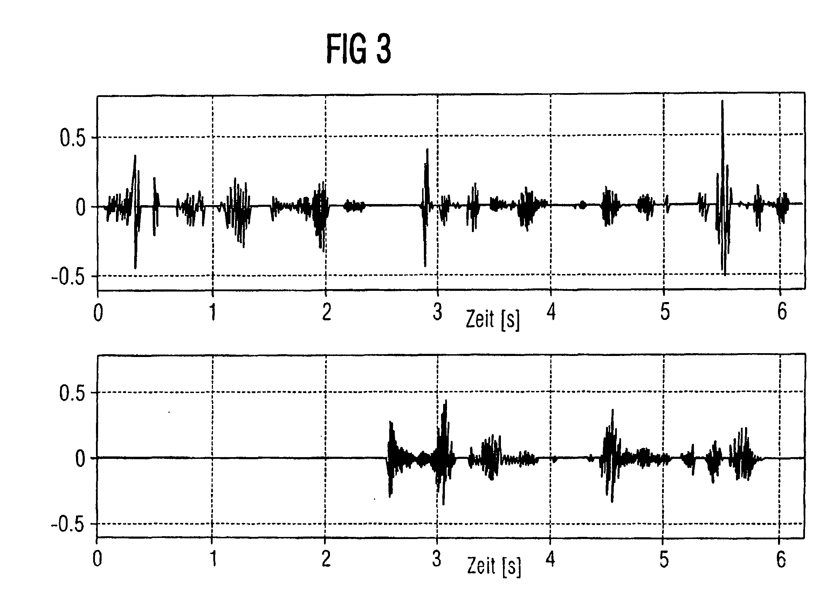

In der in Fig. 2 dargestellten Simulation wurde ein adaptives Filter mit 128 Filterkoeffizienten eingesetzt. Als Raumimpulsantwort wurde die in Fig. 1 im untersten Diagramm dargestellte Impulsantwort eines Fahrzeuginnenraumes zugrunde gelegt, simuliert durch 2047 Koeffizenten. Nach 5 Sekunden erfolgt eine Änderung der Raumimpulsantwort. Die gestrichelt dargestellten Kurven entsprechen der Systemabweichung bei Einsatz des Precursor-Verfahrens mit 32 Precursor-Koeffizienten, die durchgezogenen Kurven der Systemabweichung bei Einsatz des erfindungsgemäßen Verfahrens. Im obersten Diagramm sind die Simulationswerte für Einzelsprechen (nur ferner Teilnehmer) ohne lokale Störungen, im mittleren Diagramm Gegensprechen (beide Teilnehmer gleichzeitig) ohne lokale Störungen und im unteren Diagramm wiederum Einzelsprechen, diesmal mit lokalen Störungen abgebildet. Als lokale Störungen kommen beispielsweise Hintergrundgeräusche in Betracht. Als Algorithmus zur Adaption der Filterkoeffizienten wurde der NLMS-Algorithmus eingesetzt. Das in den Simulationen verwendete Sprachsignal ist im oberen Diagramm in Fig. 3 dargestellt, ein typisches verwendetes lokales Sprachsignal im unteren Diagramm von Fig. 3. Insgesamt liefert das erfindungsgemäße Verfahren in der simulierten Umgebung bessere Ergebnisse als das Verfahren mit Precursor-Koeffizienten. Insbesondere nach einer Änderung der Raumimpulsantwort ist die Echodämpfung mit der Precursor-Methode gering; in den beiden oberen Diagrammen ist hier sehr gut der Effekt des "Freezing" bei der Precursor-Methode erkennbar. Im Gegensatz hierzu adaptiert das erfindungsgemäße Verfahren auch nach der Änderung der Raumimpulsantwort wie zu Beginn der Simulation.

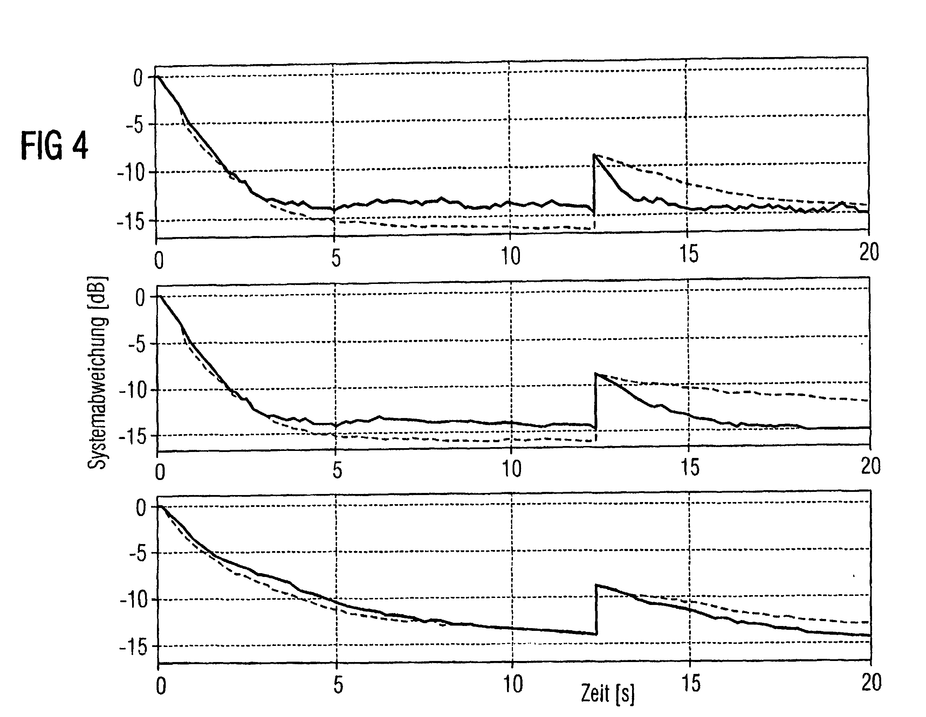

In Fig. 4 sind Simulationsergebnisse ähnlich wie in Fig. 2 dargestellt, aber für einen größeren Raum mit längerer Widerhallzeit, wie beispielsweise ein Büro, im Gegensatz zu einem Fahrzeuginnenraum mit kurzer Widerhallzeit. Die Raumimpulsantwort dieses Raums weist 2044 Koeffizienten auf und entspricht der in Fig. 1 im obersten Diagramm dargestellten Impulsantwort. Das adaptive Filter umfaßt hier 768 Koeffizienten, da die Widerhallzeit dieses Raumes sehr lang ist (siehe hierzu das oberste Diagramm in Fig.1). Für die Precursor-Methode sind 32 Koeffizienten vorgesehen. Eine Änderung der Raumimpulsantwort erfolgt nach 12,5 s. Die gestrichelte Kurve stellt die Systemabweichung bei Einsatz der Precursor-Methode, die durchgezogene Kurve die Systemabweichung bei Einsatz des erfindungsgemäßen Verfahrens dar. Im obersten Diagramm sind wieder die Simulationswerte für Einzelsprechen ohne lokale Störungen, im mittleren Diagramm für Gegensprechen ohne lokale Störungen und im unteren Diagramm für Einzelsprechen, diesmal mit lokalen Störungen abgebildet. In diesem Raum wird mit der Precursor-Methode vor der Änderung der Raumimpulsantwort insgesamt eine etwas bessere Echodämpfung als mit dem erfindungsgemäßen Verfahren erzielt. Nach der Raumimpulsantwort-Änderung ist jedoch das erfindungsgemäße Verfahren zumindest für den dargestellten Zeitraum von etwa 12,5 bis 20 s besser. Das Ergebnis kann mit der langen Widerhallzeit der Raumimpulsantwort erklärt werden. Hier fallen die Precursor-Koeffizienten nicht so sehr ins Gewicht wie bei einem Raum mit kurzer Widerhallzeit und einem entsprechenden adaptiven Filter mit insgesamt wenigen Filterkoeffizienten (siehe vorheriges Beispiel eines Fahrzeuginnenraumes mit relativ kurzer Widerhallzeit und nur 128 Filterkoeffizienten davon 32 Precursor-Koeffizienten). Gegenüber dem vorherigen Beispiel wird auch keine so große Echodämpfung mit dem erfindungsgemäßen Verfahren erzielt; diese beträgt in diesem Simulationsbeispiel höchstens etwa 15 dB (in anderen Simulationsbeispielen mit veränderten Parametern kann der angegebene Wert stark abweichen; demnach ist hier vorrangig die qualitative Aussage ausschlaggebend). Dies liegt daran, daß die zur Bestimmung der Systemabweichung nach dem erfindungsgemäßen Verfahren verwendeten Koeffizienten des Filters aufgrund der langen Widerhallzeit und dem im Vergleich hierzu kurzen Filter tatsächlich nicht gegen Null konvergieren. Daher wird die Systemabweichung überschätzt und somit die Schrittweite etwa zu groß gewählt. Allerdings wird nach einer Änderung der Raumimpulsantwort sehr schnell, d. h. in dem dargestellten Simulationsergebnis nach etwa 1,5 bis 6 s, wieder eine relativ hohe Echodämpfung erzielt.

Das erfindungsgemäße Verfahren verhindert ein "Freezing", also ein Konvergieren der Schrittweite gegen Null, insbesondere bei "kurzen" Filtern, d.h. Filter mit wenigen Filterkoeffizienten im Vergleich zu der Impulsantwort des Raumes.

Wie anhand von Fig. 1 bereits ausführlich erläutert wurde, weisen die den abklingenden Signalanteilen der Raumimpulsantwort zugeordneten Filterkoeffizienten eines die Raumimpulsantwort simulierenden Filters sehr geringe Werte auf. Man spricht in diesem Zusammenhang auch von den "letzten" Filterkoeffizienten, da diese den Signalanteilen mit der längsten Laufzeit oder größten Verzögerung zugeordnet sind. Werden daher die "letzten" Filterkoeffizienten für das erfindungsgemäße Verfahren herangezogen, steigt die Wahrscheinlichkeit von "Freezing", insbesondere bei sehr langen Filtern, also Filtern mit relativ vielen Filterkoeffizienten. Ein derartiger Fall ist in Fig. 5 für die Systemabweichung in einem Fahrzeuginnenraum simuliert. Hier weist die Raumimpulsantwort 2047 Filterkoeffizienten auf, während das adaptive Filter 256 Koeffizienten umfaßt, also relativ lang im Vergleich zur Nachhallzeit der Raumimpulsantwort ist. Für die Simulation des erfindungsgemäßen Verfahrens (durchgezogene Kurve) wurden die "letzten" Filterkoeffizienten des adaptiven Filters gewählt. Zum Vergleich wurde mit der Precursor-Methode (gestrichelte Kurve) und 32 Precursor-Koeffizienten simuliert. Die Raumimpulsantwort ändert sich nach 5 s Simulationszeit. Wie in den Figuren 2 und 4 zeigt das oberste Diagramm die Simulationswerte für Einzelsprechen ohne lokale Störungen, das mittlere Diagramm für Gegensprechen ohne lokale Störungen und das untere Diagramm für Einzelsprechen mit lokalen Störungen. Als Algorithmus zur Koeffizientenadaption wurde wie in den in den Figuren 2 und 4 dargestellten Simulationen der NLMS-Algorithmus angewandt. Nach einer Änderung der Raumimpulsantwort, etwa nach 5 s, tritt im vorliegenden Fall "Freezing" sowohl für die Precursor-Methode als auch das erfindungsgemäße Verfahren auf. Dies liegt, wie oben erläutert, daran, daß die für das erfindungsgemäße Verfahren gewählten "letzten" Filterkoeffizienten gegen Null konvergieren und damit bewirken, daß auch die Schrittweite gegen Null konvergiert. Eine Adaption nach der Raumimpulsantwort-Änderung findet somit ohne Re-Initialisierung der zur Adaption oder Einstellung der Schrittweite heranzuziehenden Filterkoeffizienten im wesentlichen nicht mehr statt.

Um diesen Zustand zu vermeiden, kann erfindungsgemäß ein Biaswert eingeführt werden. Vorzugsweise kann das Minimum aller vorhergehenden Werte des geschätzten Systemabstands zur Schätzung eines Biaswertes herangezogen werden. Da zu Beginn der Adaption noch keine vorhergehenden Werte des geschätzten Systemabstandes zur Verfügung stehen, beginnt man mit einer geschätzten Echodämpfung. Hier hat sich ein Betrag von etwa 5 bis 10 dB als gute Wahl erwiesen. Dieser Betrag kann durchaus zu hoch sein, ohne die Echodämpfung wesentlich zu beeinflussen, da ohnehin üblicherweise die Schrittweite des NLMS-Algorithmus zu Beginn der Adaption überschätzt wird.

Vorzugsweise wird der Biaswert $b_d(k)$ mittels einer nichtlinearen Filterfunktion berechnet:

$$b_d(k) = \min (||c_{ifc(k)}||^2/N_{ifc,} \; \lambda \; b_d(k-1)),$$

wobei $1 \leq \lambda << 2$ gilt.

Mit dieser Schätzung des Biaswertes kann die Schrittweite des Adaptions-Algorithmus folgendermaßen berechnet werden:

$$\hat{a}_{ifc}(k) = (||c_{ifc}(k)||^2/N_{ifc} - a_{red} \; b_d(k))$$

$$||x(k)||^2/M(e^2(k)),$$

wobei $0 << a_{red} < 1$ gilt.

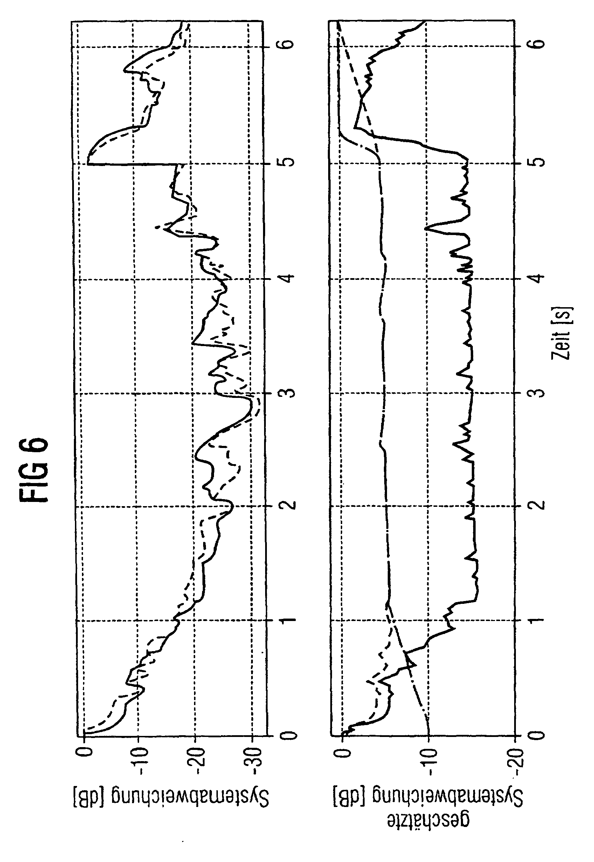

Fig. 6 zeigt den Systemabstand während einer Adaption an die Raumimpulsantwort eines Fahrzeuginnenraumes (entsprechend einem Filter mit 2047 Filterkoeffizienten) mit einem adaptiven Filter mit 256 Filterkoeffizienten, bei dem 32 Filterkoeffizienten etwa in der Mitte des Filters zum Einstellen der Schrittweite der Adaption nach dem erfindungsgemäßen Verfahren herangezogen werden (Koeffizienten $C_{97}(k)$ bis $C_{128}(k)$). Im oberen Diagramm ist der tatsächliche Systemabstand $||d(k)||^2$ mit der durchgezogenen Kurve dargestellt. Der extrapolierte Systemabstand $||g_{ifc}(k) - c_{ifc}(k)||^2$ bei unbekannter Raumimpulsantwort ist als gestrichelte Kurve im oberen Diagramm eingetragen. Nach 5 s ändert sich die Raumimpulsantwort sprunghaft, wodurch sich auch der tatsächliche und extrapolierte Systemabstand sprunghaft ändern. Im unteren Diagramm sind drei Kurven eingetragen: einmal der mittels des Biaswertes korrigierte Systemabstand $||c_{ifc}(k)||^2/N_{ifc} - a_{red} \; b_d(k)$ als durchgezogene Kurve, der Biaswert $b_d(k)$ als punkt-gestrichelte Kurve und $||c_{ifc}(k)||^2/N_{ifc}$ als gestrichelte Kurve. Der Biaswert $b_d(k)$ weist zu Beginn der Adaption einen Wert von etwa -10 dB auf, der nach etwa 1 s auf -5 dB steigt, um nach der Änderung der Raumimpulsantwort nach ca. 5 s auf etwas unterhalb 0 dB zu steigen. Der Biaswert ist immer etwas kleiner als der Systemabstand, damit die Schrittweite nicht zu sehr absinkt und "Einfrieren" vermieden wird.

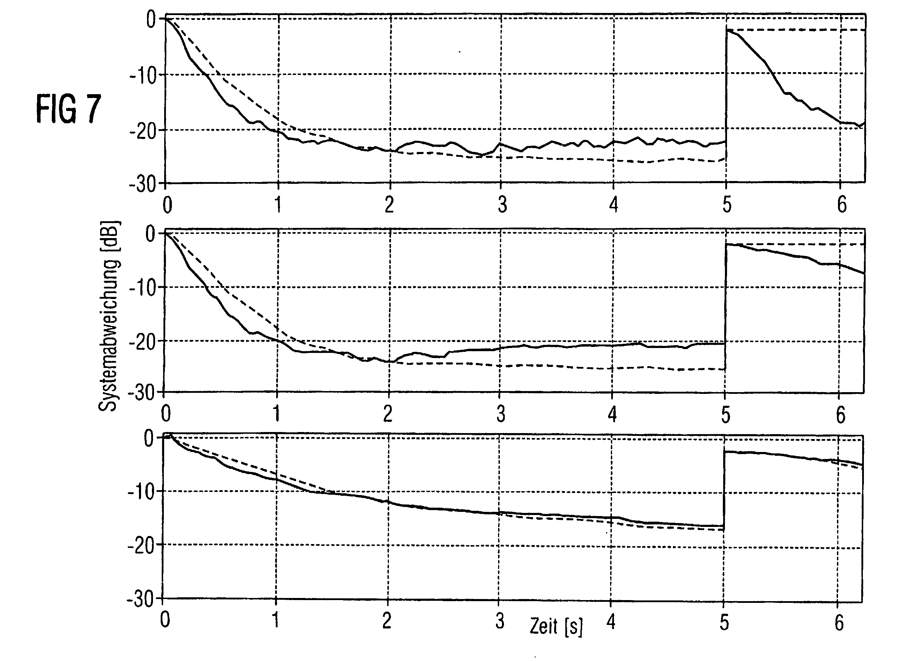

Schließlich zeigt Fig. 7 die in Fig. 5 dargestellten Simulationsergebnisse mit dem Unterschied, daß die in Fig. 7 dargestellten Simulationsergebnisse unter Verwendung des oben beschriebenen Biaswertes durchgeführt wurden. Die sonstigen Simulationsbedingungen stimmen im wesentlichen mit den der in Fig. 5 dargestellten Simulationen dar, insbesondere weist das adaptive Filter 256 Koeffizienten und die Raumpulsantwort 2047 Koeffizienten auf. Für die Precursor-Methode wurden ebenfalls 32 Precursor-Koeffizienten verwendet. Die gestrichelte Kurve stellt das Simulationsergebnis der Precursor-Methode dar, die durchgezogene Kurve wieder zum Vergleich das Simulationsergebnis mit dem erfindungsgemäßen Verfahren. Nach der Änderung der Raumimpulsantwort zeigt sich nun, daß durch die Einführung des Biaswertes ein "Freezing" bei dem erfindungsgemäßen Verfahren im wesentlichen ausbleibt. Besonders deutlich zeigt sich die Verbesserung im obersten Diagramm, wo bereits nach etwa 6 s, also ca. 1 s nach Änderung der Raumimpulsantwort, die Echodämpfung mit dem erfindungsgemäßen Verfahren wieder einen Wert von etwa -20 dB erreicht hat.

Insgesamt wird durch das erfindungsgemäße Verfahren eine einfache Struktur zur Einstellung der Schrittweite des Algorithmus erzielt, der die Filterkoeffizienten eines adaptiven Filters zur Echokompensation eines Signals einstellt. Das adaptive Filter ist vorzugsweise ein nichtrekursives oder transversales Filter (FIR-Filter). Der Rechenaufwand zur Einstellung der Schrittweite wird gegenüber dem aus dem Stand der Technik bekannten Verfahren verringert. Zudem wird keine zusätzliche ("künstliche") Verzögerung im Signalpfad eingeführt. Das Verfahren ist robust und erzielt eine Echodämpfung, die nahe an oder sogar besser als eine mit der bekannten Precursor-Methode erzielte Echodämpfung liegt bzw. ist. In durchgeführten Simulationen in beispielhaften akustischen Umgebungen wurde eine Echodämpfung von etwa 15 dB bei theoretisch, aufgrund der verwendeten Filterlänge höchstens erreichbaren 21 dB erzielt. Insbesondere eignet sich das erfindungsgemäße Verfahren und die entsprechende Anordnung zum Einsatz bei billigen Massenprodukten wie beispielsweise Mobiltelefone. Das Verfahren eignet sich auch bei entsprechender Modifikation durch Einführung eines Biaswertes für längere adaptive Filter und ist daher in verschiedensten Echodämpfungseinrichtungen einsetzbar.

Sämtliche in den Anmeldungsunterlagen offenbarten Merkmale werden als erfindungswesentlich offenbart, soweit sie einzeln oder in Kombination gegenüber dem Stand der Technik neu sind.

**Patentansprüche**

1. Verfahren zur Echokompensation eines Signals mittels eines adaptiven Filters, dessen Übertragungsfunktion an akustische Umgebungseigenschaften angepaßt wird, insbesondere zur Anwendung bei verzögerungsfreier Sprachsignalübertragung und Sprachwiedergabe im Telekommunikationsbereich, und das eine Vielzahl von einstellbaren Filterkoeffizienten aufweist, deren Werte der Gewichtsfolge der Impulsantwort des Filters entsprechen und die mittels eines NLM Algorithmus mit einer einstellbaren Schrittweite eingestellt werden,

wobei

zum Einstellen der Schrittweite eine Untermenge von Werten der Gewichtsfolge der Impulsantwort des Filters herangezogen wird, **dadurch gekennzeichnet, daß** ein Meßintervall bestimmt wird, in dem die zum Einstellen der Schrittweite heranzuziehenden Werte der Gewichtsfolge der Impulsantwort gemessen werden, und daß das Meßintervall derart plaziert wird, daß Filterkoeffizienten, die im Mittel gegen Werte ungleich Null konvergieren, zum Einstellen der Schrittweite herangezogen werden.

2. Verfahren nach Anspruch 1,
**dadurch gekennzeichnet, daß**
das Meßintervall derart plaziert wird, daß Werte nahe oder an dem Ende der Gewichtsfolge der Impulsantwort des Filters gemessen werden.

3. Verfahren nach Anspruch 1,
**dadurch gekennzeichnet, daß**
das Meßintervall derart plaziert wird, daß Werte etwa in der Mitte der Gewichtsfolge der Impulsantwort des Filters gemessen werden.

4. Verfahren nach Anspruch 3,
**dadurch gekennzeichnet, daß**
eine Korrektur der Messung der zum Einstellen der Schrittweite heranzuziehenden Werte vorgenommen wird.

5. Verfahren nach einem der Ansprüche 1 bis 4,
**dadurch gekennzeichnet, daß**
die zum Einstellen der Schrittweite heranzuziehenden Werte vor Beginn der Messung insbesondere auf Werte ungleich Null initialisiert werden.

6. Verfahren nach Anspruch 5,
**dadurch gekennzeichnet, daß**
durch die Initialisierung die zum Einstellen der Schrittweite heranzuziehenden Werte an die mittlere zu erwartende Echodämpfung durch das adaptive Filter angepaßt sind.

7. Verfahren nach einem der vorhergehenden Ansprüche,
**dadurch gekennzeichnet, daß**
zum Einstellen der Schrittweite ein Biaswert verwendet wird.

8. Verfahren nach Anspruch 7,
**dadurch gekennzeichnet, daß**
der Biaswert adaptiv geschätzt wird auf Basis der zum Einstellen der Schrittweite heranzuziehenden Werte.

9. Verfahren nach Anspruch 7 oder 8,
**dadurch gekennzeichnet, daß**
der Biaswert mit einem nichtlinearen Filter ermittelt wird.

10. Anordnung zur akustischen Echokompensation eines Signals, nach einem Verfahren gemäß einem der Ansprüche 1 bis 9, mit

- einem adaptiven Filter, welches hinsichtlich der Adaption so einstellbar ist, daß akustische Umgebungseigenschaften modelliert werden, insbesondere zur Anwendung bei verzögerungsfreier Signalübertragung und Wiedergabe im Telekommunikationsbereich, und welches eine Vielzahl von einstellbaren Filterkoeffizienten aufweist, und

- mit einer Steuereinheit, die mit einer einstellbaren Schrittweite die Filterkoeffizienten einstellt,

wobei

in der Steuereinheit ein Algorithmus vorgesehen ist, der zum Einstellen der Schrittweite eine Untermenge von Werten der Gewichtsfolge der Impulsantwort des Filters auswertet,
**dadurch gekennzeichnet, daß**
in der Steuereinheit ein Algorithmus vorgesehen ist, demzufolge ein Meßintervall bestimmt wird, in dem die zum Einstellen der Schrittweite heranzuziehenden Werte der Gewichtsfolge der Impulsantwort gemessen werden, und demzufolge das Meßintervall derart plaziert wird, daß Filterkoeffizienten, die im Mittel gegen Werte ungleich Null konvergieren, zum Einstellen der Schrittweite herangezogen werden.

11. Anordnung nach Anspruch 10,
**dadurch gekennzeichnet, daß**
ein nichtlineares Filter vorgesehen ist, um einen Biaswert zur Bestimmung der Schrittweite zu ermitteln.

12. Anordnung nach Anspruch 10 oder 11,
**dadurch gekennzeichnet, daß**
das adaptive Filter ein nichtrekursives Filter ist.

## Claims

1. Method for the echo cancellation of a signal by means of an adaptive filter and for which the transmission function is accordingly adapted to the acoustic environmental properties, particularly to be used in the case of a delay-free speech signal transmission and speech reproduction in the telecommunications area and has a plurality of filter coefficients that can be set and for which the values conform to the weight result of the impulse response of the filter and are set by means of an NLMS algorithm with a step size that can be set, in which case

for setting the step size a subset of values of the weight result of the impulse response of the filter is used,
**characterized in that**
a measuring interval is determined in which the values of the weight result of the impulse response that are to be used for setting the step size are measured and that the measuring interval is placed in such a way that filter coefficients that converge on average to values not equal to zero, are included for setting the step size.

2. Method according to Claim 1,
**characterized in that**
the measuring interval is placed in such a way that values are measured in the vicinity of or at the end of the weight result of the impulse response of the filter.

3. Method according to claim 1,
**characterized in that**
the measuring interval is placed in such a way that values are measured approximately in the middle range of the weight result of the impulse response of the filter.

4. Method according to Claim 3,
**characterized in that**
the measurement of the values to be used for setting the step size is corrected.

5. Method according to one of Claims 1 to 4,
**characterized in that**
the values to be used for setting the step size before the measurement is started are initialized particularly to values that are not equal to zero.

6. Method according to Claim 5,
**characterized in that**
by initializing, the values to be used for setting the step size are adapted to the average echo attenuation to be expected by the adaptive filter.

7. Method according to one of the claims,
**characterized in that**
a bias value is used for setting the step size.

8. Method according to Claim 7,
**characterized in that**
the bias value is estimated adaptively on the basis of the values to be used for setting the step size.

9. Method according to Claim 7 or 8,
**characterized in that**
the bias value is determined with a non-linear filter.

10. Arrangement for the acoustic echo cancellation of a signal according to a method according to one of the claims 1 to 9, with

- an adaptive filter which, with regard to the adaptation, can be set in such a way that acoustic environmental properties are modeled particularly for use in a delay-free signal transmission and reproduction in the telecommunications area and which has a plurality of filter coefficients that can be set, and
- with a control unit that sets the filter coefficients with an adjustable step size, in which case

an algorithm is provided in the control unit which for setting the step size evaluates a subset of values of the weight result of the impulse response of the filter,
**characterized in that**
an algorithm is provided in the control unit and as a result a measuring interval is determined in which the values of the weight result of the impulse response that are to be used for setting the step size are measured and as a result the measuring interval is placed in such a way that filter coefficients that converge on average to values not equal to zero are used for setting the step size.

11. Arrangement according to Claim 10,
**characterized in that**
a non-linear filter is provided to determine a bias value for determining the step size.

12. Arrangement according to Claim 10 or 11,
**characterized in that**
the adaptive filter is a non-recursive filter.

**Revendications**

1. Procédé pour l'annulation d'écho d'un signal au moyen d'un filtre adaptatif, dont la fonction de transmission est adaptée à des propriétés ambiantes acoustiques, en particulier pour l'application avec une transmission de signal vocal sans temporisation et une restitution de parole dans le domaine de la télécommunication, et qui présente une pluralité de coefficients de filtre réglables, dont les valeurs correspondent à la séquence de poids de la réponse impulsionnelle du filtre et qui sont réglés au moyen d'un algorithme NLMS avec un incrément réglable,
un sous-ensemble de valeurs de la séquence de poids de la réponse impulsionnelle du filtre étant utilisé pour le réglage de l'incrément, **caractérisé en ce qu'**on détermine un intervalle de mesure dans lequel les valeurs, à utiliser pour le réglage de l'incrément, de la séquence de poids de la réponse impulsionnelle sont mesurées, et **en ce que** l'intervalle de mesure est placé de telle sorte que des coefficients de filtre, qui convergent en moyenne vers des valeurs différentes de zéro, sont utilisés pour le réglage de l'incrément.

2. Procédé selon la revendication 1,
**caractérisé en ce que**
l'intervalle de mesure est placé de telle sorte que des valeurs proches ou situées sur l'extrémité de la séquence de poids de la réponse impulsionnelle du filtre sont mesurées.

3. Procédé selon la revendication 1,
**caractérisé en ce que**
l'intervalle de mesure est placé de telle sorte que des valeurs à peu près au centre de la séquence de poids de la réponse impulsionnelle du filtre sont mesurés.

4. Procédé selon la revendication 3,
**caractérisé en ce que**
une correction de la mesure des valeurs à utiliser pour le réglage de l'incrément est effectuée.

5. Procédé selon l'une quelconque des revendications 1 à 4,
**caractérisé en ce que**
les valeurs à utiliser pour le réglage de l'incrément sont initialisées avant le début de la mesure en particulier sur des valeurs différentes de zéro.

6. Procédé selon la revendication 5,
**caractérisé en ce que**
l'initialisation permet d'adapter les valeurs à utiliser pour le réglage de l'incrément à l'affaiblissement d'écho moyen à escompter par le filtre adaptatif.

7. Procédé selon l'une quelconque des revendications précédentes,
**caractérisé en ce que**
une valeur de précontrainte est utilisée pour le réglage de l'incrément.

8. Procédé selon la revendication 7,
**caractérisé en ce que**
la valeur de précontrainte est évaluée de façon adaptative sur la base des valeurs à utiliser pour le réglage de l'incrément.

9. Procédé selon la revendication 7 ou 8,
**caractérisé en ce que**
la valeur de précontrainte est déterminée avec un filtre non linéaire.

10. Dispositif pour l'annulation d'écho acoustique d'un signal selon un procédé selon l'une quelconque des revendications 1 à 9, comprenant

- un filtre adaptatif, qui est réglé en ce qui concerne l'adaptation de telle sorte que des propriétés d'environnement acoustiques sont modélisées, en particulier pour l'application dans le cadre d'une transmission du signal et d'une restitution sans temporisation dans le domaine de la télécommunication, et qui présente une pluralité de coefficients de filtres réglables, et

- une unité de commande qui régie les coefficients de filtre avec un incrément réglable,

un algorithme, qui analyse un sous-ensemble de valeurs de la séquence de poids de la réponse impulsionnelle du filtre pour le réglage de l'incrément, étant prévu dans l'unité de commande,
**caractérisé en ce que**,
il est prévu dans l'unité de commande un algorithme en fonction duquel est déterminé un intervalle de mesure dans lequel les valeurs, à utiliser pour le réglage de l'incrément, de la séquence de poids de la réponse impulsionnelle sont mesurées, et en fonction duquel l'intervalle de mesure est placé de telle sorte que des coefficients de filtre, qui convergent en moyenne vers des valeurs différentes de zéro, sont utilisés pour le réglage de l'incrément.

11. Dispositif selon la revendication 10,
**caractérisé en ce que**
il est prévu un filtre non linéaire pour déterminer une valeur de précontrainte pour la détermination de l'incrément.

12. Dispositif selon la revendication 10 ou 11,
**caractérisé en ce que**
le filtre adaptatif est un filtre non récursif.

FIG 1

FIG 2

Systemabweichung [dB]

Zeit [s]

FIG 3

EP 1 195 976 B1

FIG 4

EP 1 195 976 B1

FIG 5

Systemabweichung [dB]

Zeit [s]

FIG 6

FIG 7

Systemabweichung [dB]

Zeit [s]

# FIG 8
### Stand der Technik

# FIG 9
### Stand der Technik